# EUROPEAN PATENT APPLICATION

(11) **EP 1 301 054 A1**
(43) Date of publication of application: **09.04.2003**
(21) Application number: 01308508.9
(22) Date of filing: 04.10.2001
(51) Int. Cl.: H04Q 7/38

(54) **On the coordination of a reference time in a cellular terminal or a base station**

(71) Applicant: CAMBRIDGE POSITIONING SYSTEMS LIMITED, Cambridge CB2 1LA (GB)
(72) Inventor: Duffett-Smith, Peter J., Cambridge Pos.Systems Ltd, Cambridge CB2 1LA (GB); MacNaughtan, Malcolm D, Cambridge Pos. Systems Ltd, Cambridge CB2 1LA (GB); Clarke, John C., Cambridge Positioning Sys. Ltd., Cambridge CB2 1LA (GB); Scott, Craig A., Cambridge Positioning Sys. Ltd., Cambridge CB2 1LA (GB); Rendle, Emma L., Cambridge Positioning Sys. Ltd., Cambridge CB2 1LA (GB); Morris, Paul J., Cambridge Positioning Sys. Ltd., Cambridge CB2 1LA (GB)
(74) Representative: Brunner, Michael John

(57) **Abstract**

A method and apparatus are disclosed for coordinating the start times of procedures carried out in terminals **107** and/or in devices **104-106** associated with transmitters in a communications network. The time offsets of a common feature of the signals transmitted by the transmitters is measured relative to a common clock **110**. The time offset of the common feature of the signal transmitted by the respective associated transmitter is sent to the device or terminal. The start time of a procedure carried out by the device or terminal is adjusted by the respective time offset so that the procedures carried out by the devices and/or terminals overlap in time with each other.

## Description

The present invention relates to radio telecommunications networks generally, and more particularly to improved methods of finding the positions of mobile terminals in those employing Code Division Multiple Access (CDMA) technology.

There are many systems known by which the position of a mobile terminal operating in a radio communications network may be determined. These include using the signals from transmitters not connected with the network, such as the Global Positioning System (GPS) satellites, but others make use of the signals radiated by the mobile terminal and picked up by remote receivers, such as the Time Of Arrival (TOA) and so-called "Radio Finger Printing" systems or, *vice versa*, using the signals radiated by the network itself and picked up by the mobile terminal. Chief amongst the last category are the Enhanced Observed Time Difference (E-OTD) and Observed Time Difference Of Arrival (OTDOA) systems.

The E-OTD system, although generally applicable to many different communication technologies, has been particularly applied to the Global System for Mobiles (GSM). Two principal, and different, methods of using the timing offsets of signals received from the network transmitters in the position computation have been described in the art. In one, e.g. EP-A-0767594, WO-A-9730360 and AU-B-716647, the signals measured by a fixed receiver are used, in effect, to 'synchronise' the transmissions from the different transmitters. The instantaneous transmission time offsets of each transmitter relative to its neighbours are calculated from the values measured at the fixed receiver using the known positions of the fixed receiver and the transmitters. The timing offsets measured by the mobile terminal can then be used in a calculation based on well-known standard techniques in which the points of intersection of two or more hyperbolic position lines predict the position of the mobile terminal.

The other method (see our EP-B-0303371, US-A-6094168 and EP-A-1025453 the details of which are hereby incorporated by reference and which refer to a system known as Cursor™) makes use of the measurements made by both the fixed receiver and the mobile terminal to calculate the relative time difference between the signals received from each transmitter by both receivers. This results in a calculation based on the intersection of circles centred on the transmitters.

In our recent submission (***Cursor****™3G reference),* we show how E-OTD methods, as applied to GSM, have been considered for use in wide-band CDMA systems, in particular those within the Universal Mobile Telephone System (UMTS) 'third generation' (3G) technologies. Here, E-OTD has been re-named OTDOA, but it suffers from a major problem, the so-called 'hearability' problem. In CDMA networks generally, signals are transmitted by the network transmitters all using the same radio-frequency (RF) channel. In UMTS this channel is about 5 MHz wide. The signals from each transmitter are encoded using a unique 'spreading code' which allows a mobile terminal to pick out the required signal provided that (a) it knows the spreading code used by that transmitter, and (b) its internal clock is synchronized with the transmitter signals. To assist with the latter, each transmitter also radiates a 'pilot code' within the same RF channel whose coding and other characteristics make it easily distinguishable. The mobile terminal first detects and locks on to the pilot signal, receives the spreading code used by that transmitter, and then is able to decode the main transmissions. The hearability problem arises when the mobile terminal is near to a transmitter. E-OTD systems (and therefore OTDOA systems) require the measurements of the time offsets associated with at least three geographically-distinct transmitters, but when the mobile terminal is too close to a transmitter, the signals from the more-distant transmitters are drowned out by the local signals to the extent that their time offsets cannot be measured. One technique, known as 'Idle Period Down Link' (IPDL), has been proposed to overcome this problem by which the transmissions from the local transmitter are turned off periodically in a so-called 'idle period' during which the signals from the distant transmitters may be received. This has the serious disadvantages that (a) the capacity of the network to carry voice & data traffic is diminished, and (b) it is complicated to install and operate, requiring in one of its forms additional messaging in the network to coordinate the idle periods amongst the transmitters.

In EP patent application no. 01306115.5 filed 17^{th} July, 2001 we describe an adaptation of the Cursor™ system, especially as described in our US-A-6094168, to CDMA systems in general and particularly to UMTS in such a fashion as to overcome the hearability problem. No idle period is required, and the communications function can therefore operate with full capacity. It has the further advantages that (a) the fixed receivers associated with E-OTD and OTDOA are particularly simple and low-cost devices, and (b) the additional software required in the mobile terminals is less complex than that in GSM terminals and much less complex than that required for standard OTDOA with IPDL in 3G terminals. One of the requirements of our system is that a recording, or 'snapshot', of the signals transmitted by each transmitter, and of the signals received by the terminal, must be made in such a fashion that the recordings overlap in time with each other. If the network is already synchronised, i.e. the relative transmission time offsets (RTTO) of the network transmitters are close to zero, the problem of coordinating the start of the recording process is simply solved, for example by using for the presence of a particular common feature of the signals transmitted by the transmitters or received by the terminal to trigger the recording procedure. If the transmissions are synchronised, this process guarantees that the recordings made at the transmitters are synchronous with each other. The recordings made by the terminal will be delayed by the time of flight of the signals to the terminal from the serving transmitter, i.e. the transmitter with which the terminal is synchronised, and this can be allowed for by extending the recording process at each transmitter by sufficient time to ensure that it encompasses completely the recording made at the terminal.

The present invention describes how these recording procedures can be coordinated in a non-synchronised network in such a fashion that the recordings made at the transmitters overlap in time with each other as well as with the recording made at the terminal. However, it applies more generally than to coordinating recordings and can be used for any process which needs to be carried out substantially simultaneously within a telecommunications network.

The invention therefore provides, in a communications network having at least one terminal and plural transmitters, a method of coordinating the start time of a procedure carried out in a terminal with the start time of a procedure carried out by a device associated with one of the transmitters, the method comprising the steps of
(a) measuring relative to a common clock the time offsets of a common feature of the signals transmitted by the transmitters;
(b) sending to the device the time offset of the common feature of the signal transmitted by the respective associated transmitter;
(c) sending to the terminal the time offset of the common feature of the signal transmitted by the terminal's serving transmitter;
(d) adjusting the start time of a procedure carried out by the device by the respective time offset;
(e) adjusting the start time of a procedure carried out in the terminal by the time offset sent to the terminal;
whereby the procedures carried out by the device and in the terminal overlap in time with each other.

The invention also provides, in a communications network having plural transmitters, a method of coordinating the start time of procedures carried out in devices associated with respective transmitters, the method comprising the steps of
a) measuring relative to a common clock the time offsets of a common feature of the signals transmitted by the transmitters;
b) sending to a first device the time offset of the common feature of the signal transmitted by a first respective associated transmitter;
c) sending to a second device the time offset of the common feature of the signal transmitted by a second respective associated transmitter;
d) adjusting the start time of a procedure carried out by the first device by the respective time offset;
e) adjusting the start time of a procedure carried out by the second device by the respective time offset;
whereby the procedures carried out by the devices overlap in time with each other.

The invention also provides, in a communications network having plural terminals and plural transmitters, a method of coordinating the start time of procedures carried out in first and second terminals, the method comprising the steps of
a) measuring relative to a common clock the time offsets of a common feature of the signals transmitted by the transmitters;
b) sending to the first terminal the time offset of the common feature of the signal transmitted by the first terminal's serving transmitter;
c) sending to the second terminal the time offset of the common feature of the signal transmitted by the second terminal's serving transmitter;
d) adjusting the start time of a procedure carried out in the first terminal by the time offset sent to the first terminal;
e) adjusting the start time of a procedure carried out in the second terminal by the time offset sent to the second terminal;
whereby the procedures carried out in the terminals overlap in time with each other.

The invention also includes a communications network in which any of the above methods are carried out.

A procedure may be any step or set of steps required to be taken by a terminal or device in the network which needs to be carried out at the same time as another procedure by another terminal or device. For example, the procedure may comprise the steps of receiving and recording the signals transmitted by the communications network as exemplified in EP patent application no. 01306115.5 filed 17^{th} July, 2001. Another example might be the resetting and synchronization of clocks inside the terminals, or the transmitters.

The individual timing offsets, which may be negative or positive and which may result in adjustment of the procedure start time backwards or forwards, may first be compiled into a list or record held at any convenient location, for example in the Serving Mobile Location Centre (SMLC) or in the Radio Network Controller (RNC). Preferably, the SMLC or the RNC provide the common clock.

A device associated with a transmitter of the communications network may be any hardware or software device which is needed to carry out the procedure. It may, for example, be a sampling device which captures a copy of the signals transmitted by that transmitter.

The known feature of the transmitted signals may, for example, be a pilot code, but could also be any other readily-identifiable feature. For example, in a UMTS or GSM network, the network signals are divided into frames numbered sequentially, and the known feature could then be the transmission or arrival of a specified frame number.

The transmission time offsets may be measured by any convenient means. In a UMTS system, for example, there is already a mechanism by which the control centre for a number of transmitters, the RNC, can obtain a coarse value for the relative transmission time offsets of the transmitters (the so-called Node Bs) attached to it. These offsets may then be used in the construction of the list of transmission time offsets. Other mechanisms are described in our applications WO-A-00/73813 and WO-A-00/73814, in which it is described how timing measurements made by combinations of fixed receivers and/or terminals at known or unknown locations may be used to construct a list of the relative receive time offsets which would be measured from all the transmitters of the network by a single fixed receiver at a specified location; from this list of relative receive time offsets the relative transmission time offsets of the transmitters may be calculated.

In another patent application, EP application No. 01301679.5, it is described how a list of relative transmission time offsets of transmission sources may be determined using signal measurements obtained only from terminals at unknown positions. Another method would be to use an external timing reference, for example obtained from a GPS receiver attached to each transmitter

The list of transmission time offsets may be constructed at any convenient point within the network, or elsewhere. For example, it may be held within the SMLC of a location system attached to the network.

The overlap in time of the procedures need not be perfect. It is usually sufficient simply to ensure that the procedures carried out at the transmitters are started sufficiently in advance of that carried out at the terminal, and ended sufficiently after it, so that the terminal procedure is completely overlapped by each transmitter procedure taken independently. There is no need for exact synchronization either between the terminal procedure and any given transmitter procedure, or between the transmitter procedures themselves.

One example of a system according to the invention will now be described by reference to the accompanying drawings, in which:-
Figure 1 shows a UMTS network;
Figure 2 shows part of a list of approximate transmission time offsets measured in a network; and
Figure 3 depicts recordings made by a terminal of the UMTS network and by three sampling devices associated with three of the transmitters of the network.

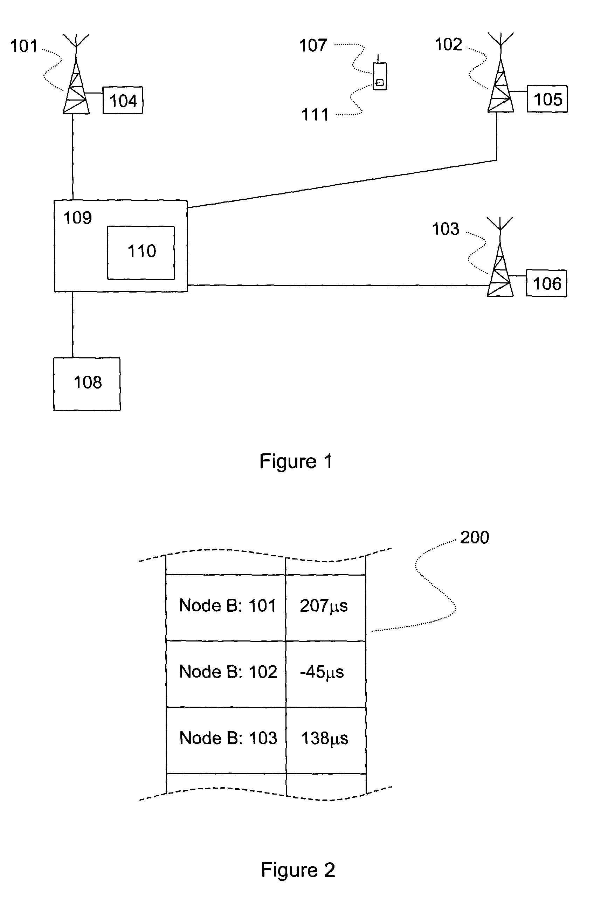

Figure 1 shows a simplified UMTS system consisting of three communications transmitters (Node Bs) 101, 102, 103, each of which has a sampling device 104, 105, 106, a single terminal 107, and a computing device (SMLC) 108. The Node Bs are controlled by the RNC 109. The network is unsynchronised so that the common features of the signals are not transmitted by the three Node Bs 101, 102, 103 at the same moments, but are offset in time from one another, each by the respective value of the relative transmission time offsets (RTTOs). A network process of the UMTS system provides the RNC with coarse estimates of the RTTO of each of the three Node Bs with respect to the RNC's clock 110. This information is passed to the SMLC 108 where it is compiled into a list.

Figure 2 shows a part of the list 200 of RTTOs compiled by the SMLC 108 appropriate to the Node Bs 101, 102, and 103. In this particular case, Node B 101 had an RTTO of 207 microseconds, Node B 102 of -45 microseconds, and Node B 103 of 138 microseconds, each with respect to the clock 110 in the RNC 109. The common feature 305,306,307 of the transmitted signals used in this case was the start of a frame whose number ended in two zeroes e.g. 100, 200, 300 etc. Such frame numbers occurred approximately every second and triggered the start of a recording by the sampling devices 104, 105, 106, but not at the time of transmission. Instead, the start of recording by sampling device 104 was delayed by 207 microseconds, that by sampling device 105 advanced by 45 microseconds, and that by sampling device 106 delayed by 138 microseconds. Thus recordings made by all three sampling devices were caused to begin at approximately the same instant.

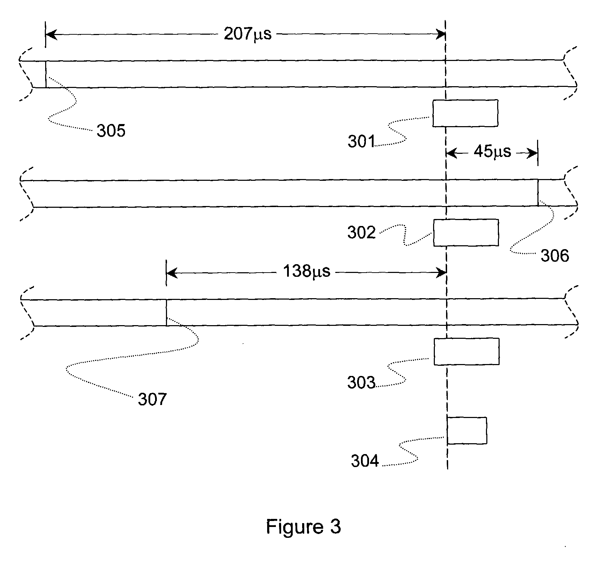

The terminal 107 was served by Node B 102, i.e. its primary communications were with that Node B, and its clock 111 was synchronised with the receipt of the signals transmitted by it. Control information was transmitted to the terminal 107 containing, amongst other things, the information that the RTTO of Node B 102 was -45 microseconds. At a later moment, the user of the terminal 107 initiated a location request (by pressing a button), and this caused the terminal equipment to wait until 45 microseconds in advance of the arrival of the next frame number ending in two zeroes before making a snapshot recording of the signals received by it. The resulting recordings are shown diagrammatically in Figure 3. In the figure, the recordings 301, 302, 303, 304 have been vertically aligned in time, demonstrating that the process just described provided the required overlap of the recordings made by the three sampling devices 104, 105, 106 and by the terminal 107.

## Claims

1. A method of coordinating the start time of a procedure carried out in a terminal with the start time of a procedure carried out by a device associated with one of the transmitters in a communications network having at least one terminal and plural transmitters, the method comprising the steps of
a) measuring relative to a common clock the time offsets of a common feature of the signals transmitted by the transmitters;
b) sending to the device the time offset of the common feature of the signal transmitted by the respective associated transmitter;
c) sending to the terminal the time offset of the common feature of the signal transmitted by the terminal's serving transmitter;
d) adjusting the start time of a procedure carried out by the device by the respective time offset;
e) adjusting the start time of a procedure carried out in the terminal by the time offset sent to the terminal;
whereby the procedures carried out by the device and in the terminal overlap in time with each other.

2. A method of coordinating the start time of procedures carried out in devices associated with respective transmitters in a communications network having at least one terminal and plural transmitters, the method comprising the steps of
a) measuring relative to a common clock the time offsets of a common feature of the signals transmitted by the transmitters;
b) sending to a first device the time offset of the common feature of the signal transmitted by a first respective associated transmitter;
c) sending to a second device the time offset of the common feature of the signal transmitted by a second respective associated transmitter;
d) adjusting the start time of a procedure carried out by the first device by the respective time offset;
e) adjusting the start time of a procedure carried out by the second device by the respective time offset;
whereby the procedures carried out by the devices overlap in time with each other.

3. A method of coordinating the start time of procedures carried out in first and second terminals in a communications network having at least one terminal and plural transmitters, the method comprising the steps of
a) measuring relative to a common clock the time offsets of a common feature of the signals transmitted by the transmitters;
b) sending to the first terminal the time offset of the common feature of the signal transmitted by the first terminal's serving transmitter;
c) sending to the second terminal the time offset of the common feature of the signal transmitted by the second terminal's serving transmitter;
d) adjusting the start time of a procedure carried out in the first terminal by the time offset sent to the first terminal;
e) adjusting the start time of a procedure carried out in the second terminal by the time offset sent to the second terminal;
whereby the procedures carried out in the terminals overlap in time with each other.

4. A method according to any of claims 1 to 3, in which the procedure comprises the steps of receiving and recording the signals transmitted by the communications network.

5. A method according to any of claims 1 to 3, in which the procedure comprises the resetting and synchronization of clocks inside the terminals, or the transmitters using the time offsets.

6. A method according to any of claims 1 to 5, in which the individual timing offsets are compiled into a list or record.

7. A method according to claim 6, wherein the list or record is held in the Serving Mobile Location Centre (SMLC) or in the Radio Network Controller (RNC).

8. A method according to any of claims 1 to 7, in which the common clock is located in the SMLC or the RNC.

9. A method according to any of claims 1 to 8, wherein the device associated with a transmitter is a sampling device which captures a copy of the signals transmitted by that transmitter.

10. A method according to any of claims 1 to 9, wherein the known feature of the transmitted signals is a pilot code.

11. A method according to any of claims 1 to 9, wherein the known feature of the transmitted signals is a specified frame number in a transmission which comprises frames numbered sequentially.

12. Apparatus for carrying out the method of any of claims 1 to 11.

13. A communications network including apparatus according to claim 12.
